# EUROPEAN PATENT SPECIFICATION

(11) **EP 4 266 959 B1**
(45) Date of publication and mention of the grant of the patent: **18.12.2024**
(21) Application number: 22704365.0
(22) Date of filing: 07.02.2022
(51) Int. Cl.: A47J 31/42, A47J 42/08, A47J 42/44

(54) **DEVICE FOR GRINDING COFFEE BEANS AND RELATIVE CONTROL METHOD**
VORRICHTUNG ZUM MAHLEN VON KAFFEEBOHNEN UND ZUGEHÖRIGES STEUERUNGSVERFAHREN
DISPOSITIF POUR MOUDRE DES GRAINS DE CAFÉ ET PROCÉDÉ DE COMMANDE ASSOCIÉ

(30) Priority: 15.02.2021 IT 202100003395
(43) Date of publication of application: 01.11.2023
(73) Proprietor: De'Longhi Appliances S.r.l., 31100 Treviso (IT)
(72) Inventor: ROSSETTO, Giovanni, 31100 Treviso (IT); BOLZONELLO, Stefano, 31100 Treviso (IT); BELLO, Daniele, 31100 Treviso (IT)
(74) Representative: Rapisardi, Mariacristina
(86) International application number: PCT/EP2022/052814
(87) International publication number: WO 2022/171553

(56) References cited:
- WO-A1-2018/219878

## Description

The present invention relates to a device for grinding coffee beans and a method for its control.

As is known, the final result of the brewing is influenced by a variety of parameters, depending or not on the user's preferences.

For example, the final particle size of ground coffee powder is one of the most important variables in determining the final result.

The final particle size of the coffee powder heavily influences the hydraulic conditions of the percolation, determining the pressure drop of the percolation water and consequently the flow rate provided by the pump and the thermal behaviour of the boiler.

A finer grinding leads to a greater extraction of the substances contained in the coffee, producing a stronger and more full-bodied drink and with the production of a lot of cream, while a coarser grinding is more suitable for the preparation of a less extracted coffee with less cream.

The definition of the correct dose of ground coffee at a given particle size in accordance with the user's taste is made difficult by the variability of many other parameters depending on the type of coffee used, in particular by the batch, the brand, the roasting, its moisture content, and on the other side by the grinder, in particular by the grinding system, the mechanical adjustment once it has been broken in, the wear of the grinders, and the quantity of coffee introduced.

US2013001339 discloses a time-based grinder control method, in which the quantity of ground coffee is set by the user via an interface. The controller of the grinder varies the activation time of the grinder as a function of the setting of the particle size of the coffee powder selected by the user. WO 2018/219878 A1 discloses a device for grinding coffee beans comprising a controller, wherein the controller is configured to acquire the current value of the number of turns of the motor or the grinder such that when a pre-determined threshold value is achieved, the motor is stopped.

The disadvantage of these methods is that they do not take into account a multiplicity of ancillary conditions which can affect the final result.

The technical task of the present invention is therefore to make a device for grinding coffee and its control method which make it possible to eliminate the cited technical drawbacks of the prior art.

As part of this technical task, an object of the invention is to provide a correct quantity of ground coffee taking into account both user-selectable preferences and ancillary conditions which cannot be determined by the user.

The technical task, as well as these and other objects, are obtained according to the present invention by a grinding device for grinding coffee beans, comprising a hopper for the coffee beans, grinders, an interface for the user for selecting the quantity of ground coffee in a range of values of selectable quantities of coffee powder, an electric motor supplied by mains electricity voltage for driving the grinders, characterised in that it comprises measuring means for measuring the mains electricity voltage and an electronic controller configured to:
- associate, for each value of a selectable quantity of ground coffee, a series of grinding time values with a series of corresponding values of the mains electricity voltage;
- acquire a value of a quantity of ground coffee selected by the user via said interface;
- detect by said measuring means a mains electricity voltage value;
- for the acquired value of a quantity of ground coffee selected by the user, set the grinding time value corresponding to the detected mains electricity voltage value; and
- drive the grinders for the set grinding time value.

The present invention also relates to a method for controlling a grinding device for grinding coffee beans having grinders drivable by an electric motor supplied by a mains electricity voltage, characterised in that it comprises the following steps:
- associating, for each value of a selectable quantity of ground coffee by a user, a series of grinding time values with a series of corresponding values of the mains electricity voltage;
- acquiring a value of a quantity selected by the user of ground coffee;
- detecting a mains electricity voltage value;
- for the acquired value of a quantity selected by the user of ground coffee, setting the grinding time value corresponding to the detected mains electricity voltage value; and
- driving the grinders for the set grinding time value.

Advantageously the association, for each quantity of ground coffee selectable by a user, of the grinding times with the corresponding values of the mains electricity voltage is experimentally determinable.

The association can be determined experimentally and be represented by a mathematical law or by a table which, for each value of ground coffee quantity selectable by a user, establishes a two-way correspondence between grinding time and mains electricity voltage.

Therefore, the present invention allows to compensate for the temporal variations in mains supply voltage due to the variability of the load of the electricity distribution mains which, for example, can vary significantly between day and night when many industrial plants are stopped.

Dispensing the correct quantity of ground coffee obtained by modifying the grinding time as the mains supply voltage changes improves the user experience, since they can taste a coffee with organoleptic properties corresponding to their choices.

The quantity of ground coffee selectable by the user is linked to several parameters, including the origin of the coffee, the roasting degree of the coffee beans, the particle size of the ground coffee, the mechanical and/or electrical tolerances of the grinding device.

Taking all these parameters into account, the user selects the quantity of ground coffee and the electronic controller, once the selection made by the user has been acquired, determines the grinding time based on the detected mains supply voltage. Further features and advantages of the invention will more fully emerge from the description of a preferred but not exclusive embodiment of the device and relative control method according to the invention, illustrated by way of non-limiting example in the accompanying figures of the drawings, in which:
figure 1 schematically shows a coffee machine where the grinding device is integrated;

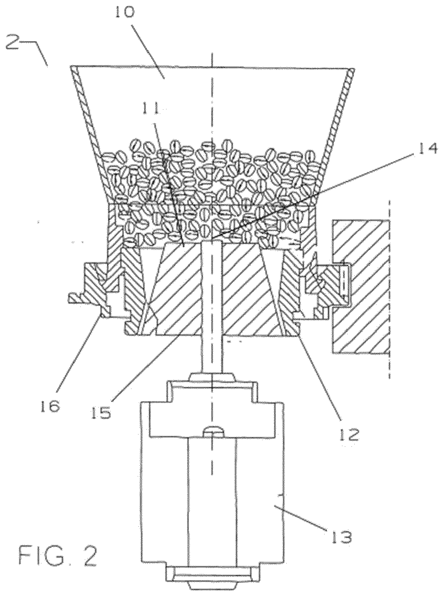

figure 2 shows some components of the grinding device;

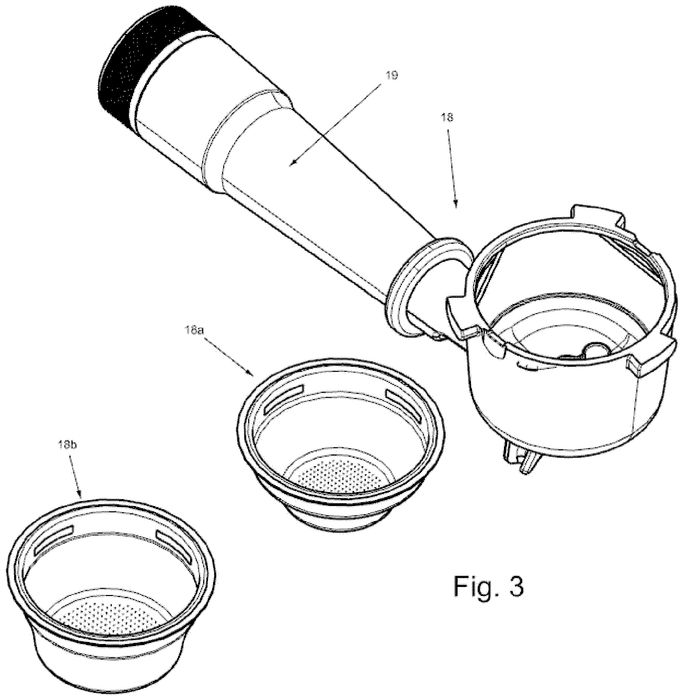

figure 3 schematically shows the filter holder and the two removable filters having single and double-dose loading capacities, respectively;

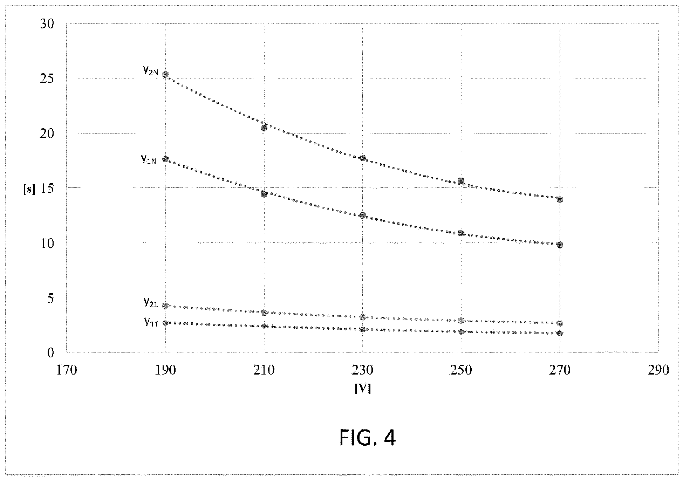

figure 4 shows four mathematical functions which associate the grinding time (in ordinate yᵢ, expressed in seconds) with the mains electricity voltage (in abscissa x, expressed in Volts), to have the quantity of ground coffee selected by the user.

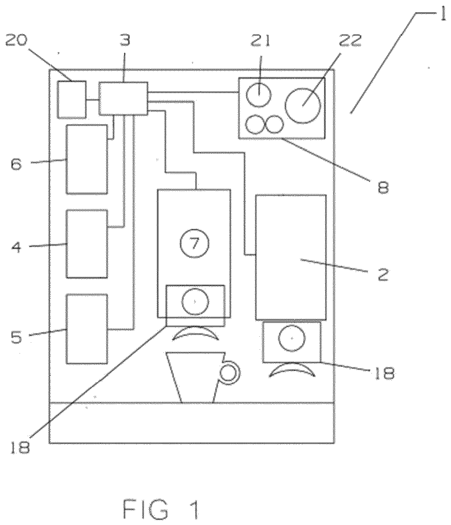

The coffee bean grinding device 2 can be of the stand-alone type or, as shown in figure 1, can be integrated in a coffee machine 1.

The grinding device 2 comprises in a known manner an electronic controller 3, an interface 8 with the user for selecting the quantity of ground coffee in a range of selectable coffee powder quantity values, a coffee bean loading hopper 10, grinders 11, 12 which receive the coffee beans from the loading hopper 10, and an electric motor 13 powered by a mains electricity voltage for driving the grinders 11, 12. The electric motor 13 can be a typical universal motor or a direct current motor, but could be a different type of motor.

The user interface 8 can comprise various types of selectors, e.g., knobs and/or levers and/or buttons, e.g., virtual buttons made using "touch screen" technology. In figure 1, the interface 8 includes at least a first selector 21 and a second selector 22. As will be seen below, the first selector 21 discriminates whether the dispensing is of only one or two doses of ground coffee, and the second selector 22 indicates the quantity of ground coffee requested by the user.

The grinders 11, 12 can be driven in relative rotation by the electric motor 13.

In particular, the grinder 2 includes a rotating grinder 11 and a non-rotating grinder 12 coaxial with respect to an axis 14 and delimiting a gap 15, which determines the particle size, where the grinding is performed.

The grinding device typically further comprises means for adjusting the particle size of the ground coffee configured to change the distance between the grinders 11, 12 and possibly also a sensor for detecting the distance between the grinders in communication with the electronic controller. Such a sensor for detecting the distance between the grinders can also not be included.

The particle size adjustment means comprises an adjustment ring 16 which can be driven to move the non-rotating grinder 12 parallel to the axis 14 so as to be able to change the width of the gap 15.

A grinding device with a construction different from that described above obviously falls within the scope of the invention, as long as it falls within the scope of the appended claims.

The coffee machine 1 in a known manner comprises a brewing water supply pump 4 connected in suction to a tank 5 or directly to the water mains, with a brewing water heating boiler 6, and with a brewer 7.

In the illustrated case in which the grinding device 2 is integrated in the coffee machine 1, it is possible to include a single electronic controller 3 and a single user interface 8 for both.

The coffee machine 1 can be automatic with direct dispensing of the quantity of ground coffee into the brewer or, as illustrated in figure 1, manual with dispensing of the quantity of ground coffee into a filter 18a, 18b of a filter holder 18 which can be gripped by a handle 19 to be coupled by hand to the head of the brewer 7.

The filter holder 18 is configured to interchangeably house a single-dose filter 18a of ground coffee or a double-dose filter 18b of ground coffee.

Advantageously, the grinding device 2 comprises means 20 for measuring the mains electricity voltage which powers the electric motor 13, whether universal or in direct current or other types.

The means for measuring 20 the mains electricity voltage can be made by a dedicated electronic circuit in communication with the electronic controller 3.

The electronic controller 3 is configured to: associate, for each value of a selectable quantity of ground coffee, a series of grinding time values with a series of corresponding mains electricity voltage values; acquire a value of a quantity of ground coffee selected by the user via the interface 8; detect a mains electricity voltage value by the measuring means 20; for the acquired value of a quantity of ground coffee selected by the user, set the grinding time value corresponding to the detected mains electricity voltage value; and drive the grinders 11, 12 for the set grinding time.

More precisely, the electronic controller 3 is configured to detect the mains electricity voltage before the grinders are driven.

For example, when the user performs the selection and imparts the grinding command via the interface 8, the measuring means 20 measures the mains electricity voltage and communicates it to the electronic controller 3 before the latter can start the grinding.

Alternatively, the measurement of the electrical voltage can be updated at regular time intervals and the last measurement acquired by the measuring means 20 is communicated to the electronic controller 3 before the latter can start the grinding. The electronic controller 3 advantageously stores in its memory mathematical laws and/or tables, determined experimentally, which represent the association, for each quantity of selectable ground coffee, of the grinding time values with the corresponding values of the mains electricity voltage.

The association defines an inverse correlation between the grinding time values and the corresponding mains electricity voltage values.

The fine selection by the user of the quantity of ground coffee is linked to various parameters including the particle size of the ground coffee, the origin of the coffee, the roasting degree of the coffee beans, the mechanical and/or electrical tolerances of the grinding device.

The fine selection of the quantity of ground coffee is performed with the second selector 22.

With the same choice of the aforesaid parameters represented by the final selection made with the second selector 22, the user has the possibility, always through the interface 8, to choose with the first selector 21 among a first coarse quantity of ground coffee if he/she uses the filter 18a with a single dose of ground coffee for the brewing and a second coarse quantity of ground coffee if he uses the filter 18b with a double dose of ground coffee for the brewing.

Ultimately, the first selector 21 of the interface is used for the coarse selection of the quantity of ground coffee according to the type of filter which the user decides to use, while the second selector 22 is used for the fine selection of the quantity of ground coffee according to the aforesaid parameters.

To clarify how the grinding time is associated with the mains voltage, we refer to figure 1 which shows four mathematical functions, determined experimentally. Each function yᵢⱼ which refers to a specific quantity of selected ground coffee matches the grinding time to the mains electricity voltage.

The mathematical functions can be polynomial functions of degree n.

For example but not necessarily, the mathematical functions shown in figure 1 are of the second degree, and therefore describe parables.

In the function yᵢⱼ:
"i" refers to the coarse selection of the quantity of ground coffee, where i = 1 for the filter 18a configured to contain a single dose of ground coffee and i =2 for the filter 18b configured to contain a double dose of ground coffee;
"j" refers to the fine selection of the quantity of ground coffee, where j = 1, 2, ...N and N is the number of selectable values for the quantity of ground coffee, and where as the value of the index J progresses, the value of the selected quantity of ground coffee progressively increases from a minimum value (corresponding to j=1) to a maximum value (corresponding to j=N).

Therefore: the function y₁₁ determines the grinding time when the mains voltage varies, for the minimum value of the quantity of selectable ground coffee in the single-dose filter 18a; the function y₂₁ determines the grinding time when the mains voltage varies for the minimum value of the quantity of selectable ground coffee in the double-dose filter 18b; the function y_{1N} determines the grinding time when the mains voltage varies, for the maximum value of the quantity of selectable ground coffee in the single-dose filter 18a; and the function y_{2N} determines the grinding time when the mains voltage varies, for the maximum value of the quantity of selectable ground coffee in the double-dose filter 18b.

As a rule, each quantity value of selectable ground coffee "ij" corresponds to a function yᵢⱼ.

Therefore, there are N functions yᵢⱼ for when the single-dose filter 18a is used and other N functions yᵢⱼ for when the double-dose filter 18b is used.

However, it is alternatively possible to adopt a simplified logic which consists in determining only y₁₁ , y₂₁, y_{1N}, y_{2N}, i.e., determining the function yᵢⱼ only for the minimum and maximum value of the quantity of ground coffee and envisaging, for each mains voltage value, a predetermined relationship, for example linear, between the value of the selected quantity of ground coffee and the grinding time value; this is both when using the single-dose filter 18a of ground coffee (i =1) and when using the double-dose filter 18b of ground coffee (i =2).

In practice, through the interface 8, the user selects the type of filter with the first selector 21 and the precise value of the quantity of ground coffee with the second selector 22.

The electronic controller 3 acquires the value of the quantity of ground coffee selected by the user and the value of the mains electricity voltage.

The electronic controller 3 selects the mathematical function or the table combined with the request processed by the user, and based on the electricity voltage value detected, uses the mathematical function or the table selected to calculate the grinding time and sets the value of the grinding time thus calculated for driving the grinders 11, 12.

The coffee been grinding device and its relative control method thus conceived are susceptible to numerous modifications and variants within the scope of the appended claims. Moreover, all details may be replaced with other technically equivalent elements within the scope of the appended claims.

In practice, the materials used, as well as the dimensions, can be any according to the needs and the state of the art.

## Claims

1. A grinding device (2) for grinding coffee beans, comprising a hopper (10) for the coffee beans, grinders (11, 12), an interface (8) for the user for selecting the quantity of ground coffee in a range of values of selectable quantities of coffee powder, and an electric motor (13) supplied by mains electricity voltage for driving said grinders (11, 12), **characterised in that** it comprises measuring means (20) for measuring the mains electricity voltage and an electronic controller (3) configured to:
- associate, for each value of a selectable quantity of ground coffee, a series of grinding time values with a series of corresponding values of the mains electricity voltage;
- acquire a value of a quantity of ground coffee selected by the user via said interface (8);
- detect by said measuring means (20) a mains electricity voltage value;
- for the acquired value of a quantity of ground coffee selected by the user, set the grinding time value corresponding to the detected mains electricity voltage value; and
- drive the grinders (11, 12) for the set grinding time value.

2. The grinding device (2) for grinding coffee beans according to the preceding claim, **characterised in that** said electronic controller (3) is configured to detect the mains electricity voltage before the grinders (11, 12) are driven.

3. The grinding device (2) for grinding coffee beans according to any preceding claim, **characterised in that** said electronic controller (3) stores mathematical laws and/or tables in its memory, which are determined experimentally and show the association for each value of a selectable quantity of ground coffee of said series of grinding time values with said series of corresponding values of the mains electricity voltage.

4. The grinding device (2) for grinding coffee beans according to the preceding claim, **characterised in that** said association defines an inverse correlation between grinding time and mains electricity voltage.

5. The grinding device (2) for grinding coffee beans according to any preceding claim, **characterised in that** said measuring means (20) for measuring the mains electricity voltage comprises a dedicated electronic circuit in communication with said electronic controller (3).

6. A coffee machine (1) that integrates a grinding device (2) according to any preceding claim.

7. The coffee machine (1) according to the preceding claim with a filter holder (18) provided with an interchangeable filter (18a, 18b) for containing a single or double dose of ground coffee, **characterized in that** said interface (8) is configured to select the filter (18a, 18b) in combination with said value of the quantity of ground coffee.

8. A method for controlling a grinding device (2) for grinding coffee beans having grinders (11, 12) that are drivable by an electric motor (1) supplied by a mains electricity voltage, **characterised in that** it comprises the following steps:
- associating, for each value of a selectable quantity of ground coffee by a user, a series of grinding time values with a series of corresponding values of the mains electricity voltage;
- acquiring a value of a quantity selected by the user of ground coffee;
- detecting a mains electricity voltage value;
- for the acquired value of a quantity selected by the user of ground coffee, setting the grinding time value corresponding to the detected mains electricity voltage value; and
- driving the grinders (11,12) for the set grinding time value.

9. The method for controlling a grinding device for grinding coffee beans according to the preceding claim, **characterised in that** said mains electricity voltage value is detected before driving the grinders (11, 12).

10. The method for controlling a grinding device for grinding coffee beans according to any one of claims 8 and 9, **characterised in that** each value of a selectable quantity of ground coffee is determined by the combined selection of the value of parameters such as granulometry, origin of the coffee, degree of roasting of the coffee beans, mechanical and/or electric tolerances of the grinding device.

## Patentansprüche

1. Eine Mahlvorrichtung (2) zum Mahlen von Kaffeebohnen, umfassend einen Trichter (10) für die Kaffeebohnen, Mahlwerke (11, 12), eine Schnittstelle (8) für den Benutzer zur Auswahl der Menge des gemahlenen Kaffees innerhalb eines Bereichs von wählbaren Kaffeemengen und einen Elektromotor (13), der mit Netzspannung betrieben wird, um die genannten Mahlwerke (11, 12) anzutreiben, **dadurch gekennzeichnet, dass** sie Messeinrichtungen (20) zur Messung der Netzspannung und einen elektronischen Controller (3) umfasst, der konfiguriert ist, um:
- für jeden Wert einer wählbaren Menge gemahlenen Kaffees eine Serie von Mahlzeitwerten mit einer Serie entsprechender Netzspannungswerte zu verknüpfen;
- einen von dem Benutzer über die genannte Schnittstelle (8) ausgewählten Wert einer Menge gemahlenen Kaffees zu erfassen;
- über die genannten Messeinrichtungen (20) einen Netzspannungswert zu erfassen;
- für den erfassten Wert der vom Benutzer gewählten Menge gemahlenen Kaffees den Mahlzeitwert zu setzen, der dem erfassten Netzspannungswert entspricht; und
- die Mahlwerke (11, 12) für den gesetzten Mahlzeitwert anzutreiben.

2. Die Mahlvorrichtung (2) zum Mahlen von Kaffeebohnen nach dem vorhergehenden Anspruch, **dadurch gekennzeichnet, dass** der genannte elektronische Controller (3) so konfiguriert ist, dass er die Netzspannung erfasst, bevor die Mahlwerke (11, 12) angetrieben werden.

3. Die Mahlvorrichtung (2) zum Mahlen von Kaffeebohnen nach einem der vorhergehenden Ansprüche, **dadurch gekennzeichnet, dass** der genannte elektronische Controller (3) mathematische Gesetze und/oder Tabellen in seinem Speicher speichert, die experimentell bestimmt wurden und die Zuordnung für jeden Wert einer wählbaren Menge gemahlenen Kaffees dieser Serie von Mahlzeitwerten mit der genannten Serie entsprechender Netzspannungswerte zeigen.

4. Die Mahlvorrichtung (2) zum Mahlen von Kaffeebohnen nach dem vorhergehenden Anspruch, **dadurch gekennzeichnet, dass** die genannte Zuordnung eine umgekehrte Korrelation zwischen Mahlzeit und Netzspannung definiert.

5. Die Mahlvorrichtung (2) zum Mahlen von Kaffeebohnen nach einem der vorhergehenden Ansprüche, **dadurch gekennzeichnet, dass** die genannten Messeinrichtungen (20) zur Messung der Netzspannung eine dedizierte elektronische Schaltung umfassen, die mit dem genannten elektronischen Controller (3) in Verbindung steht.

6. Eine Kaffeemaschine (1), die eine Mahlvorrichtung (2) nach einem der vorhergehenden Ansprüche integriert.

7. Die Kaffeemaschine (1) nach dem vorhergehenden Anspruch mit einem Siebträger (18), der mit einem austauschbaren Filter (18a, 18b) für eine Einzel- oder Doppeldosis gemahlenen Kaffees versehen ist, **dadurch gekennzeichnet, dass** die genannte Schnittstelle (8) so konfiguriert ist, dass sie den Filter (18a, 18b) in Kombination mit dem genannten Wert der Kaffeemenge auswählt.

8. Ein Verfahren zur Steuerung einer Mahlvorrichtung (2) zum Mahlen von Kaffeebohnen mit Mahlwerken (11, 12), die von einem Elektromotor (1) angetrieben werden, der mit einer Netzspannung versorgt wird, **dadurch gekennzeichnet, dass** es die folgenden Schritte umfasst:
- für jeden Wert einer vom Benutzer wählbaren Menge gemahlenen Kaffees eine Serie von Mahlzeitwerten mit einer Serie entsprechender Netzspannungswerte zu verknüpfen;
- einen vom Benutzer gewählten Wert einer Menge gemahlenen Kaffees zu erfassen;
- einen Netzspannungswert zu erfassen;
- für den erfassten Wert einer vom Benutzer gewählten Menge gemahlenen Kaffees den Mahlzeitwert zu setzen, der dem erfassten Netzspannungswert entspricht; und
- die Mahlwerke (11, 12) für den gesetzten Mahlzeitwert anzutreiben.

9. Das Verfahren zur Steuerung einer Mahlvorrichtung zum Mahlen von Kaffeebohnen nach dem vorhergehenden Anspruch, **dadurch gekennzeichnet, dass** der genannte Netzspannungswert erfasst wird, bevor die Mahlwerke (11, 12) angetrieben warden.

10. Das Verfahren zur Steuerung einer Mahlvorrichtung zum Mahlen von Kaffeebohnen nach einem der Ansprüche 8 und 9, **dadurch gekennzeichnet, dass** jeder Wert einer wählbaren Menge gemahlenen Kaffees durch die kombinierte Auswahl von Parametern wie Granulometrie, Herkunft des Kaffees, Röstgrad der Kaffeebohnen sowie mechanische und/oder elektrische Toleranzen der Mahlvorrichtung bestimmt wird.

## Revendications

1. Un dispositif de mouture (2) pour moudre des grains de café, comprenant une trémie (10) pour les grains de café, des meules (11, 12), une interface (8) pour l'utilisateur permettant de sélectionner la quantité de café moulu dans une plage de valeurs de quantités sélectionnables de poudre de café, et un moteur électrique (13) alimenté par la tension d'alimentation du réseau électrique pour entraîner lesdites meules (11, 12), **caractérisé en ce qu'**il comprend des moyens de mesure (20) pour mesurer la tension du réseau électrique et un contrôleur électronique (3) configuré pour :
- associer, pour chaque valeur d'une quantité sélectionnable de café moulu, une série de valeurs de temps de mouture avec une série de valeurs correspondantes de la tension du réseau électrique ;
- acquérir une valeur d'une quantité de café moulu sélectionnée par l'utilisateur via ladite interface (8);
- détecter, par lesdits moyens de mesure (20), une valeur de tension du réseau électrique ;
- pour la valeur acquise d'une quantité de café moulu sélectionnée par l'utilisateur, définir la valeur de temps de mouture correspondant à la valeur de tension du réseau électrique détectée ;
- et entraîner les meules (11, 12) pendant la valeur de temps de mouture définie.

2. Le dispositif de mouture (2) pour moudre des grains de café selon la revendication précédente, **caractérisé en ce que** ledit contrôleur électronique (3) est configuré pour détecter la tension du réseau électrique avant que les meules (11, 12) ne soient entraînées.

3. Le dispositif de mouture (2) pour moudre des grains de café selon l'une quelconque des revendications précédentes, **caractérisé en ce que** ledit contrôleur électronique (3) stocke dans sa mémoire des lois mathématiques et/ou des tableaux, déterminés expérimentalement, montrant l'association pour chaque valeur d'une quantité sélectionnable de café moulu de ladite série de valeurs de temps de mouture avec ladite série de valeurs correspondantes de la tension du réseau électrique.

4. Le dispositif de mouture (2) pour moudre des grains de café selon la revendication précédente, **caractérisé en ce que** ladite association définit une corrélation inverse entre le temps de mouture et la tension du réseau électrique.

5. Le dispositif de mouture (2) pour moudre des grains de café selon l'une quelconque des revendications précédentes, **caractérisé en ce que** lesdits moyens de mesure (20) pour mesurer la tension du réseau électrique comprennent un circuit électronique dédié en communication avec ledit contrôleur électronique (3).

6. Une machine à café (1) intégrant un dispositif de mouture (2) selon l'une quelconque des revendications précédentes.

7. La machine à café (1) selon la revendication précédente, avec un porte-filtre (18) équipé d'un filtre interchangeable (18a, 18b) pour contenir une dose simple ou double de café moulu, **caractérisée en ce que** ladite interface (8) est configurée pour sélectionner le filtre (18a, 18b) en combinaison avec ladite valeur de la quantité de café moulu.

8. Un procédé de commande d'un dispositif de mouture (2) pour moudre des grains de café avec des meules (11, 12) entraînées par un moteur électrique (1) alimenté par une tension du réseau électrique, **caractérisé en ce qu'**il comprend les étapes suivantes :
- associer, pour chaque valeur d'une quantité sélectionnable de café moulu par un utilisateur, une série de valeurs de temps de mouture avec une série de valeurs correspondantes de la tension du réseau électrique ;
- acquérir une valeur d'une quantité de café moulu sélectionnée par l'utilisateur ;
- détecter une valeur de la tension du réseau électrique ;
- pour la valeur acquise d'une quantité de café moulu sélectionnée par l'utilisateur, définir la valeur de temps de mouture correspondant à la valeur détectée de la tension du réseau électrique ;
- et entraîner les meules (11, 12) pendant la valeur de temps de mouture définie.

9. Le procédé de commande d'un dispositif de mouture pour moudre des grains de café selon la revendication précédente, **caractérisé en ce que** ladite valeur de la tension du réseau électrique est détectée avant l'entraînement des meules (11, 12).

10. Le procédé de commande d'un dispositif de mouture pour moudre des grains de café selon l'une quelconque des revendications 8 et 9, **caractérisé en ce que** chaque valeur d'une quantité sélectionnable de café moulu est déterminée par la sélection combinée de la valeur de paramètres tels que la granulométrie, l'origine du café, le degré de torréfaction des grains de café, les tolérances mécaniques et/ou électriques du dispositif de mouture.
